# EUROPÄISCHE PATENTSCHRIFT

(11) **EP 3 301 481 B1**
(45) Veröffentlichungstag und Bekanntmachung des Hinweises auf die Patenterteilung: **15.02.2023**
(21) Anmeldenummer: 16191314.0
(22) Anmeldetag: 29.09.2016
(51) Int. Cl.: G01S 19/05, G01S 19/09, G01S 19/25, G01S 19/30

(54) **CODEARCHIV FÜR REPLIKA-PSEUDOZUFALLSRAUSCHCODES**
CODE ARCHIVE FOR REPLIKA-PSEUDORANDOM NOISE CODES
ARCHIVE CODÉE POUR CODE DE BRUIT PSEUDOALÉATOIRE RÉPLIQUÉ

(43) Veröffentlichungstag der Anmeldung: 04.04.2018
(73) Patentinhaber: Siemens Aktiengesellschaft, 80333 München (DE)
(72) Erfinder: Arzdorf, Kai, 85579 Neubiberg (DE); Furch, Andreas, 85354 Freising (DE)

(56) Entgegenhaltungen:
- EP-A1- 2 961 093
- WO-A1-01/75470
- US-A1- 2009 195 450
- R?GAMER ALEXANDER ET AL: "Secure Position and Time Information by Server Side PRS Snapshot Processing", GNSS 2016 - PROCEEDINGS OF THE 29TH INTERNATIONAL TECHNICAL MEETING OF THE SATELLITE DIVISION OF THE INSTITUTE OF NAVIGATION (ION GNSS+ 2016), THE INSTITUTE OF NAVIGATION, 8551 RIXLEW LANE SUITE 360 MANASSAS, VA 20109, USA, 16. September 2016 (2016-09-16), Seiten 3002-3017, XP056013881,

## Beschreibung

Die Erfindung betrifft ein Verfahren mit Erzeugen und Speichern von Replika-Pseudozufallsrauschcodes sowie eine Codeerzeugungseinheit mit einer Schnittstelle zu einem Codearchiv.

Mittels globaler Navigationssatellitensysteme, kurz GNSS, wird eine satellitengestützte Orts- und Zeitbestimmung ermöglicht. Dazu zeichnen Empfänger Navigationssatellitensignale auf und verarbeiten diese. GNSS-Signale können dabei mit sogenannten Pseudo-Random-Number-Codesequenzen oder Pseudozufallsrauschcodes oder kurz PRN-Codes versehen sein. Diese Pseudo-zufälligen Codefolgen werden allgemein bei der Funkübertragung verwendet. Es handelt sich dabei um Spreizcodes, welche eine Frequenzspreizung eines Nachrichtensignals bewirken. Bei einer breitbandigen Übertragung weist ein solches Signal eine hohe Robustheit gegenüber Störungen auf. Spreizungsfolgen werden insbesondere in Satellitennavigationssystemen wie GPS, Glonass, Beidou oder Galileo verwendet. Dabei liegt das empfangene Satellitensignal im Allgemeinen unterhalb eines Rauschpegels. Ein Empfänger kann das ausgestrahlte Signal erst durch Korrelation mit einem ihm selbst vorliegenden passenden PRN-Code detektieren und decodieren. Es handelt sich dabei in der Regel um den identischen PRN-Code, der beispielsweise bereits im Empfänger vorliegen kann. Man kann auch von einem Replika-PRN-Code sprechen, welcher ein rekonstruierter oder nachgebildeter oder als zweite Ausführung vorliegender PRN-Code ist. Ein mit einem PRN-Code versehenes Empfangssignal oder Nachrichtensignal, beispielsweise Satellitensignal, wird ausgewertet, indem es mit einem dazu passenden PRN-Code - üblicherweise dem gleichen PRN-Code - korreliert wird, so dass ein Nutzsignal extrahiert werden kann.

PRN-Codes sind in einigen Anwendungen öffentlich bekannt, beispielsweise für Open Service Signale wie für das zivile GPS-System, welche zur öffentlichen Nutzung gedacht sind. Es kommen ferner geheime PRN-Codes zum Einsatz, insbesondere für militärische Anwendungen. Solche PRN-Codes sind vor Zugriff durch Unbefugte zu schützen. Es handelt sich um besonders sensible Daten. Mit Hilfe dieser geheimen Codefolgen werden entsprechende Satellitensignale eines limitiert verwendbaren Satellitensystems geschützt.

Die Auswertung empfangener Nachrichtensignale und insbesondere empfangener GNSS-Signale kann mittels einer sogenannten Snapshotmethode oder Signalausschnittmethode erfolgen. Das bedeutet, dass aus empfangenen Signalen Signalausschnitte von einem Empfänger erstellt werden und weitergeleitet werden und nachgelagert beispielsweise auf einem Server analysiert werden. Auf dem Server erfolgt dann insbesondere im Falle von Satellitennavigationssignalen die sogenannte PVT-Bestimmung, kurz für Position-Velocity-Time-Bestimmung, zur Ermittlung der Orts-, Zeit- und Geschwindigkeitsinformation, die den aufgezeichneten Signalen entnehmbar ist. GNSS-Signalempfänger zeichnen dabei zunächst lediglich die Satellitensignale über einen bestimmten, meist kurzen Zeitraum auf, speichern diese zwischenzeitlich und erst nachgelagert werden sie analysiert. Die Auswerteeinheit ist beispielsweise ein zentraler Server, der etwa eine entsprechende Rechenkraft aufweisen kann, um bei Bedarf eine Vielzahl an Snapshot-Auswertungen simultan vornehmen zu können.

Für die Auswertung von Signalen, welche mit geheimen PRN-Codes geschützt sind, werden die entsprechenden geheimen PRN-Codes benötigt. Um das System nicht zu gefährden und zu kompromittieren müssen sie entsprechend geheim gehalten werden und restriktiv verwendet werden. Gebildet werden können solche geheimen PRN-Codes etwa auf Basis anderer Geheimnisse, die innerhalb des Sender-Empfänger-Systems, beispielsweise innerhalb von Satellitennavigationssystemen, sicher gespeichert und verwendet werden müssen.

Für vergangene Zeiträume können mit regulären Empfängern nicht ohne weiteres die passenden Codesequenzen erzeugt werden. Eine Bereitstellung der richtigen Codesequenzen für vergangene Zeiträume kann nur dann ordnungsgemäß erfolgen, wenn alle Systemparameter gültig für den zu betrachtenden Zeitpunkt in der Vergangenheit sind. Eine solche Rekonstruktion wesentlicher Systemparameter eines vergangenen Zeitpunktes ist komplex und unvorteilhaft.

Das Prinzip der sogenannten Snapshot PVT, d.h. der Snapshot-Auswertung empfangener Satellitensignale durch eine nachgelagerte Auswertungseinheit, ist im Umfeld von Open Service Signalen, die öffentlich auswertbar sind und mit denen ohne Einsatz eines Geheimnisses die Akquisition und das Nachverfolgen von Satelliten möglich ist, bekannt.

Die europäische Patentanmeldung EP 2 961 093 A1 beschreibt ein gesichertes Bereitstellen eines Replika-Pseudo-Zufallsrauschcodes an eine Empfängereinheit mit Hilfe einer Zulässigkeitsprüfung. Zum Durchführen einer Zulässigkeitsprüfung werden Werte erfasst und mit vorgegebenen Schwellenwerten abgeglichen. Dadurch werden das Verwenden eines Replika-PseudoZufallsrauschcodes und das Dekodieren eines gesicherten Empfangssignals empfängerseitig sicherer gestaltet.

Es ergibt sich die Aufgabe eines sicheren Umgangs mit PRN-Codesequenzen innerhalb eines Snapshot-Signal-Auswertesystems im Rahmen geschützter Nachrichtensignale.

Diese Aufgabe wird durch die Merkmale der unabhängigen Ansprüche gelöst. Vorteilhafte Ausgestaltungen sind in den abhängigen Ansprüchen angegeben.

Unter dem Begriff Replika-Pseudozufallsrauschcode wird in der vorliegenden Anmeldung ein Pseudozufallsrauschcode verstanden, der mit einem in einem ausgestrahlten Signal, beispielsweise einem Funk- oder Satellitensignal, verwendeten Pseudozufallsrauschcode korrespondiert. Insbesondere handelt es sich bei zueinander passenden oder zueinander gehörigen Pseudozufallsrauschcodes und Replika-Pseudozufallsrauschcodes um identische Codes. Der Begriff wird zur Unterscheidung zwischen den erzeugten und gespeicherten Pseudozufallsrauschcodes und den in einem empfangenen Signal enthaltenen Pseudozufallsrauschcode eingeführt. Zu einer Vielzahl von Signalausschnitten werden die zugehörigen Replika-Pseudozufallsrauschcodes erzeugt, d.h. diejenigen Replika-Pseudozufallsrauschcodes, die zu den jeweiligen Signalausschnitten passend sind.

Replika-Pseudozufallsrauschcodes werden mit Hilfe von Systemparametern der Signalausschnitte erzeugt. Die Systemparameter, welche zur Erzeugung von Replika-Pseudozufallsrauschcodes nötig sind, sind gültig für einen betrachteten Zeitpunkt oder Zeitraum sowie einen bestimmten Sender. Insbesondere werden Satellitensignalausschnitte analysiert, welche durch einen Pseudozufallsrauschcode geschützt sind. Beispielsweise sind zu einer Vielzahl von Satellitensignalausschnitten, welche verschiedene Satelliten und/ oder verschiedene Zeitabschnitte betreffen, jeweilige Systemparameter gültig oder zugehörig, die zur Erzeugung der passenden Replika-Pseudozufallsrauschcodes benötigt werden. Insbesondere kommen geheime Pseudozufallsrauschcodes zum Einsatz, für welche korrespondierende und ebenfalls geheime Replika-Pseudozufallsrauschcodes mittels der Systemparameter ermittelt werden. In diesen Fällen sind die Systemparameter äußerst sensitive und schützenswerte Daten, da die geheimen PRN-Codes nur in Kenntnis der Systemparameter erzeugbar sein sollen und die Systemparameter nicht öffentlich bekannt sind. Beispielsweise werden für Anwendungen im Satellitennavigationsumfeld zu jedem Zeitpunkt sämtliche Satellitensignale bearbeitet, d.h. für sämtliche Satelliten eines Satellitensystems werden kontinuierlich zur Gegenwart die zur Decodierung erforderlichen Replika-Pseudozufallsrauschcodes berechnet. Die Replika-Pseudozufallsrauschcodes, welche insbesondere in vorteilhaften Ausgestaltungen geheim sind, werden dann in einem Codearchiv gespeichert. Dabei handelt es sich beispielsweise um einen regulären Speicher. Es können mehrere Empfängereinheiten vorgesehen sein, welche gemeinsam die Signale des gesamten Satellitensystems abdecken, d.h. beispielsweise alle zu den verschiedenen Satelliten zugehörigen PRN-Codes erzeugen.

Die in dem Codearchiv gespeicherten Replika-Pseudozufallsrauschcodes werden zur Decodierung eines empfangenen Signalausschnittes, der mit dem zugehörigen Pseudozufallsrauschcode geschützt ist, verwendet. Im Codearchiv werden die Replika-Pseudozufallsrauschcodes blockweise gespeichert und für Auswertungen von zu vergangenen Zeitpunkten ausgestrahlten Nachrichtensig-nalen bereitgestellt.

Das Erzeugen der Replika-Pseudozufallsrauschcodes geschieht insbesondere unabhängig davon, ob von einem Standort aus, an welchem die Erzeugung stattfindet, der entsprechende Sender, insbesondere ein entsprechender Satellit, sichtbar ist. Ist beispielsweise eine Empfängereinheit dazu ausgebildet, geheime Replika-Pseudozufallsrauschcodes für das Codearchiv zu generieren, so kann das Erzeugen unabhängig vom Standort des Empfängers erfolgen. Dies ist besonders vorteilhaft, wenn man die nachgelagerte Auswertung nicht nur für die unmittelbare Umgebung der Codeerzeugungseinheit durchführen möchte.

Für eine Snapshot-Analyse beliebiger Nachrichtensignale, wie Funk- oder Satellitensignale, können die Replika-Pseudozufallsrauschcodes auf vorteilhafte Weise aus dem Codearchiv abgefragt werden, ohne dass eine spezielle Empfangs- oder Berechnungshardware notwendig ist und insbesondere ohne im Falle geheimer PRN-Codes die für die Berechnung oder Erzeugung erforderlichen systeminhärenten Geheimnisse verfügbar haben zu müssen. Die Systemparameter müssen beispielsweise nicht auf einem Server, der die PVT-Auswertung durchführt, gespeichert werden. Dies verbessert den Schutz eines mit geheimen PRN-Codes gesicherten Satellitensignalverfahrens vor Angriffen oder Manipulationen erheblich. Auf vorteilhafte Weise werden so geheime Replika-Pseudozufallsrauschcodes insbesondere für vergangene Zeiträume archiviert und ein Decodieren geschützter Satellitensignale wird so vereinfacht und sicherer gestaltet.

Gemäß einer Ausgestaltung werden die Replika-Pseudozufallsrauschcodes blockweise erzeugt und/ oder gespeichert. Somit entsteht auf vorteilhafte Weise ein Archiv von geheimen Codesequenzen, die blockweise sortiert gespeichert werden. Beispielsweise erfolgt das Speichern eines geheimen Replika-Pseudozufallsrauschcodes sekündlich. In diesem Beispiel wird für jeden Zeitraum einer Sekunde der entsprechende gültige Replika-Pseudozufallsrauschcode generiert und gespeichert.

Gemäß einer Ausgestaltung werden die Replika-Pseudozufallsrauschcodes gemeinsam mit den zugehörigen Empfangssignalausschnitt kennzeichnenden Daten gespeichert. Beispielsweise werden Metadaten über die Zugehörigkeit und Verwendung eines jeweiligen Blocks, beispielsweise eine Angabe zu einer Senderzugehörigkeit, zum Beispiel Satellitenzugehörigkeit, oder eine Zeitangabe oder eine Frequenzbandangabe, gemeinsam mit dem jeweiligen Replika-Pseudozufallsrauschcode gespeichert. Dies ermöglicht ein sortiertes Speichern innerhalb des Codearchivs und ein schnelles Zugreifen auf gespeicherte Codes für eine Decodierung oder PVT-Auswertung eines Satellitensignalausschnittes aus der Vergangenheit zu einem beliebigen Zeitpunkt, zu welchem zugehörige Codefolgen im Codearchiv verfügbar sind.

Gemäß einer Ausgestaltung werden die Replika-Pseudozufallsrauschcodes nach Sender und/oder Zeit sortiert gespeichert. Beispielsweise erfolgt ein Sortieren nach Satellitensignal. Dies ermöglicht ein noch effizienteres Auffinden der Codes im Codearchiv.

Gemäß einer Ausgestaltung erfolgt das Erzeugen der Replika-Pseudozufallsrauschcodes oder ein Weiterleiten der erzeugten Replika-Pseudozufallsrauschcodes an das Codearchiv nur für Replika-Pseudozufallsrauschcodes, die für zeitlich vor dem Erzeugungsdatum liegende Zeiträume gültig sind oder zum Zeitpunkt des Erzeugungsdatums gültig sind. Beispielsweise werden eine vertrauenswürdige Uhr oder vertrauenswürdige Uhrzeitangaben, die einer Codeerzeugungseinheit von extern bereitgestellt werden, als Grundlage für die PRN-Code-Erzeugung hergenommen. So wird sichergestellt, dass keine zukünftigen Replika-Pseudozufallsrauschcodes bereitgestellt werden, welche missbräuchlich verwendet werden könnten. Nur die zu bereits ausgestrahlten oder aktuellen Satellitennavigationssignalen gehörigen Pseudozufallsrauschcodes und deren korrespondierende Replika-Pseudozufallsrauschcodes sollen exportierbar sein.

Gemäß einer Ausgestaltung wird eine Systemzeit gesichert ermittelt, so dass zu zeitlich vor dem Erzeugungsdatum liegenden Zeiträumen zugehörige Replika-Pseudozufallsrauschcodes oder zu zum Zeitpunkt des Erzeugungsdatums zugehörige Replika-Pseudozufallsrauschcodes gesichert übermittelt werden. Auf vorteilhafte Weise wird die Systemzeit dabei beispielsweise über eine PVT-Methode bestimmt. Bei einem Empfänger, welcher selbst aus einem Satellitennavigationssystem eine PVT-Analyse durchführen kann, ist sicherstellt, dass aufgrund der besonders vertrauenswürdigen Systemzeit PRN-Codes zu vergangenen Zeiträumen oder aktuellen Zeitpunkten exportiert werden. Da die PVT-Bestimmung ja nur mit den zu einem bestimmten Zeitpunkt geltenden PRN-Codes möglich ist, ist bei einer PVT-Bestimmung sichergestellt, dass keine Replika-Sequenzen für zukünftige Zeitpunkte exportiert werden.

Der Empfänger, der selbst eine PVT-Analyse durchführt, erzeugt ausgehend von einer ihm vorliegenden Systemzeit die PRN-Codes und versucht auf Basis dieser, das derzeit ausgestrahlte Satellitensignal zu dekodieren. Gelingt ihm dies, ist sichergestellt, dass die für die erfolgreiche Dekodierung erzeugten PRN-Codes aktuell, d.h. zum Erzeugungsdatum gehörig, oder "vergangen", nicht jedoch zukünftig sind. Die Exportschnittstelle kann dann freigeschaltet werden.

Gemäß einer Ausgestaltung wird eine Authentifizierung und insbesondere nachfolgende Autorisierung des Codearchivs durchgeführt und bei erfolgreicher Authentifizierung und insbesondere Autorisierung erfolgt ein Speichern. Beispielsweise kann an einer Exportschnittstelle einer Codeerzeugungseinheit eine Authentifizierung und nachfolgende Autorisierung des Codearchivs durchgeführt werden. So kann sichergestellt werden, dass Codesequenzen nur an ein entsprechend validiertes und gesichertes Codearchiv gesendet werden können. Auf Transportebene kann somit eine Authentifizierung des Codearchivs durchgeführt werden, beispielsweise anhand von kryptographischen Authentifikationsprotokollen und entsprechend konfigurierter Zugriffssteuerungslisten oder Access Control Lists, kurz ACL.

Gemäß einer Ausgestaltung werden die Replika-Pseudozufallsrauschcodes mit einer Kennzeichnung, welche insbesondere eine digitale Signatur aufweist, versehen und eine Übertragung wird in Abhängigkeit von der Kennzeichnung freigegeben. Auf Applikationsebene kann somit eine Übertragung in Richtung einer zu gering abgesicherten Zone verhindert werden. Es kann ein Zonenkonzept realisiert werden, bei welchem eine Übertragung von Daten anhand der Kennzeichnung der Daten eingeschränkt oder verhindert wird. Die Kennzeichnung kann dabei eine Art der Verwendung spezifizieren oder eine Übertragungsrichtung oder einen Empfänger. Außerdem kann mittels einer digitalen Signatur zusätzlich die Integrität der enthaltenen Informationen sichergestellt werden.

Die Erfindung betrifft ferner eine Codeerzeugungseinheit mit einer Schnittstelle zu einem Codearchiv,
- wobei die Codegenerierungseinheit ausgebildet ist zum Erzeugen von Replika-Pseudozufallsrauschcodes zugehörig zu einer Vielzahl von Empfangssignalausschnitten mit Hilfe von Systemparametern der Empfangssignalausschnitte, wobei die Vielzahl von Empfangssignalausschnitten verschiedene Sender und/oder verschiedene Zeitabschnitte betrifft,
- wobei die Schnittstelle ausgebildet ist zum Übertragen der erzeugten Replika-Pseudozufallsrauschcodes an das Codearchiv, wobei die übertragenen Replika-Pseudozufallsrauschcodes durch das Codearchiv speicherbar sind.

Der Codeerzeugungseinheit liegen die Informationen, die zum Erzeugen der Replika-Pseudozufallsrauschcodes nötig sind, vor. Insbesondere handelt es sich um sensible Informationen oder Geheimnisse, die zur Erzeugung geheimer Replika-Pseudozufallsrauschcodes nötig sind. Insbesondere liegen alle kennzeichnenden Informationen von Satellitensignalausschnitten vor, so dass auf Basis dieser Informationen der entsprechende Replika-Pseudozufallsrauschcode generiert werden kann.

Gemäß einer Ausgestaltung ist die Codeerzeugungseinheit als Empfängereinheit für Satellitennavigationssignale ausgebildet, wobei die Empfängereinheit ausgebildet ist zum Erzeugen von Replika-Pseudozufallsrauschcodes zu Satellitensignalausschnitten empfangener Satellitennavigationssignale. Insbesondere wird ein regulärer Empfänger modifiziert, so dass er kontinuierlich oder permanent oder laufend als Codeerzeugungseinheit dient und mit dem Codearchiv gekoppelt ist. Zu aktuell oder tatsächlich empfangenen Satellitensignalausschnitten kann dieser Empfänger die passenden Replika-Pseudozufallsrauschcodes erzeugen. Insbesondere ist der Empfänger derart modifiziert, dass auch PRN-Codesequenzen berechnet werden zu Satelliten, welche vom Empfängerstandort aus gerade nicht sichtbar sind. Somit kann auf vorteilhafte Weise ein allumfassender Auswertedienst angeboten werden.

Je nach Anzahl von Kanälen, die ein Empfänger parallel verarbeiten kann, können auch mehrere auf die beschriebene Weise modifizierte Empfänger zeitgleich zum Einsatz gebracht werden, um auf diese Weise den gesamten Satellitenraum eines Satellitensystems abzudecken. Mehrere solcher Einheiten können auch vorteilhaft redundant eingesetzt werden, um so auch bei Ausfall einer Codeerzeugungseinheit das Codearchiv lückenlos bedienen zu können.

Gemäß einer Ausgestaltung ist die Empfängereinheit ausgebildet, eine Systemzeit gesichert zu ermitteln, so dass ein Übertragen erzeugter Replika-Pseudozufallsrauschcodes zugehörig zu zeitlich vor dem Erzeugungsdatum liegenden Zeiträumen oder zugehörig zum Zeitpunkt des Erzeugungsdatums gesichert erfolgt. Die Systemzeit wird aus einem oder mehreren empfangenen Satellitensignalen ermittelt. Empfangene Signale werden, zumindest teilweise, auch direkt durch den Empfänger verarbeitet, um beispielsweise eine PVT-Analyse durchzuführen und so auf eine zuverlässige Systemzeit zu kommen. So kann vermieden werden, dass PRN-Codesequenzen erzeugt werden und als Replika-Pseudozufallsrauschcodes gespeichert werden, welche nicht zum gegenwärtigen Zeitpunkt gehören.

Beginnend mit dem Betrieb des vorgeschlagenen Dienstes zur Erzeugung und Speicherung von Replika-Pseudozufallsrauschcodes wird das Codearchiv beispielsweise kontinuierlich um die aktuell gültigen PRN-Sequenzen erweitert. Somit entfällt die Notwendigkeit, im Nachgang vergangene Systemparameter rekonstruieren zu müssen, wenn auf Codesequenzen vergangener Zeiträume zurückgegriffen werden soll für eine Decodierung eines Signalausschnittes aus der Vergangenheit. Dies ist für Satellitennavigationssignale oder Funksignale oder allgemein Nachrichtensignale vorteilhaft, die mit öffentlichen oder geheimen PRN-Codes geschützt sind. Ausgehend von einem regulären Empfänger sind nur geringe technische Anpassungen notwendig. Insbesondere sind auf einem regulären Satellitensignalempfänger, der geheime PRN-Codes erzeugen kann, bereits Maßnahmen zum Schutz der sensitiven Daten, wie der Systemparameter, vorgesehen.

Gemäß einer Ausgestaltung überträgt die Codeerzeugungseinheit die erzeugten Replika-Pseudozufallsrauschcodes gemeinsam mit den zugehörigen Empfangssignalausschnitt kennzeichnenden Daten über die Schnittstelle an das Codearchiv.

Insbesondere ermöglicht eine strenge zeitliche Kennzeichnung das schnelle Auffinden des richtigen Datensatzes, wenn eine Auswerteeinheit auf das Codearchiv zugreift, um einen Signalausschnitt aus der Vergangenheit zu decodieren. Insbesondere bei sich nicht kurzzeitig periodisch wiederholenden PRN-Codes im Rahmen von öffentlichen GNSS-Diensten ist vorteilhafterweise ein geringerer Aufwand bei der Bestimmung der für Snapshots aus der Vergangenheit benötigten PRN-Codes erforderlich. Die passenden Replika-Pseudozufallsrauschcodes werden ausgelesen, ohne dass dafür ein vergangener Systemzustand zu bestimmen wäre.

Gemäß einer Ausgestaltung weist die Codeerzeugungseinheit ferner eine Authentifizierungs- und insbesondere Autorisierungskomponente zum Authentifizieren und insbesondere Autorisieren des Codearchivs auf. Insbesondere weist die Schnittstelle zugleich die Funktionalität einer Authentifizierungskomponente auf. Beispielsweise wird mit Hilfe kryptographischer Protokolle die Authentizität und Berechtigung des Kommunikationspartners bei der Übermittlung der Replika-Pseudozufallsrauschcodes überprüft.

Die Erfindung betrifft ferner ein System bestehend aus einer Codeerzeugungseinheit, einem Codearchiv und einer Auswerteeinheit. Die Auswerteeinheit greift auf die im Codearchiv gespeicherten Replika-Pseudozufallsrauschcodes zu, um eine Decodierung eines Signalausschnittes vorzunehmen. Insbesondere kann es sich um einen Satellitensignalausschnitt zugehörig zu einem vergangenen Zeitpunkt handeln. Auf vorteilhafte Weise erfolgt somit eine Snapshot-PVT-Bestimmung, ohne dass spezielle Empfangs- oder Berechnungshardware notwendig ist und ohne Kenntnis der für die Berechnung erforderlichen Systemparameter für den vergangenen Zeitpunkt oder Zeitraum durch die Auswerteeinheit.

Gemäß einer Ausgestaltung weist das Codearchiv einen Zugriffsschutzmechanismus auf die gespeicherten Replika-Pseudozufallsrauschcodes auf. Beispielsweise wird eine Klassifizierung geheimer PRN-Codes verwendet, um einen Zugriff auf die Codes einzuschränken, insbesondere in Abhängigkeit von einer vorangegangen erfolgreichen Authentifizierung.

Die Einheiten können hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Prozessor oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein. Unter einem Prozessor ist eine elektronische Schaltung zur computerbasierten Datenverarbeitung zu verstehen, beispielsweise eine CPU. Es kann sich um die CPU eines Computers handeln oder um einen Mikroprozessor eines Mikrochips.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung in Frage, wie zum Beispiel ein Mikroprozessor.

Die Erfindung wird nachfolgend anhand von Ausführungsbeispielen mit Hilfe der Figuren näher erläutert. Es zeigen:
- Figur 1: ein Blockdiagramm eines Verfahrensablaufes gemäß einem ersten Ausführungsbeispiel der Erfindung;
- Figur 2: eine schematische Darstellung eines Systems gemäß einem zweiten Ausführungsbeispiel der Erfindung.

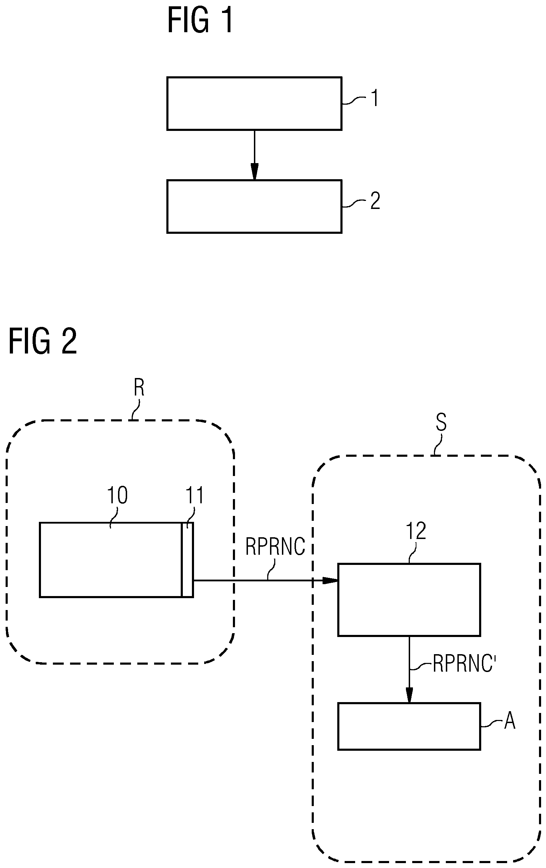

In Figur 1 ist schematisch dargestellt, wie in einem ersten Schritt ein Erzeugen 1 geheimer Replika-Pseudozufallsrauschcodes erfolgt und darauf folgend in einem zweiten Schritt ein Speichern 2 der erzeugten geheimen Replika-Pseudozufallsrauschcodes in einem Codearchiv erfolgt. Einem Codegenerator werden dabei zu Satellitensignalausschnitten gehörige Systemparameter bereitgestellt, so dass die zugehörigen geheimen Replika-Pseudozufallsrauschcodes ermittelt werden können. Dabei erfolgt das Erzeugen der passenden Replika PRN-Codes zu allen verfügbaren Satelliten des zugrundeliegenden Satellitennavigationssystems in einem vorgegebenen Zeitintervall. Beispielsweise erfolgt aufsetzend auf einem zivilen GPS-System eine Absicherung von Satellitennavigationssystemen mit geheimen PRN-Codes. Das zivile GPS-System wird mit einer Chiprate von 1023000 Chips pro Sekunde betrieben. Bei einer angenommenen Anzahl von 32 Satelliten fällt somit pro Sekunde ein Datenvolumen von etwa 33 Millionen Bits an, wobei die dazugehörigen zu speichernden Metadaten nicht berücksichtigt werden. Bei einem Betrieb über ein Jahr würden in diesem Fall folglich an reinen Codedaten somit etwa 120 Terabyte anfallen, so dass der Speicherbedarf in einer Größenordnung liegt, die problemlos realisierbar ist.

Das Speichern 2 erfolgt nach Zeitpunkt oder Zeitabschnitt sortiert und mit den zugehörigen Satelliten des Signalausschnitts kennzeichnenden Daten. Auf das Codearchiv mit den darin gespeicherten Replika PRN-Codes kann zugegriffen werden, wenn eine berechtigte Anfrage eingeht zur Analyse eines Satellitensignalausschnittes. Dafür kann insbesondere eine anfragende Einheit überprüft werden, bevor ein zu einem vergangenen Zeitpunkt gehöriger Replika PRN-Code herausgegeben wird.

Figur 2 zeigt schematisch eine Ausführungsvariante einer Codeerzeugungseinheit 10, welche in einem Empfänger R integriert ist. Die Codeerzeugungseinheit weist ferner eine Schnittstelle 11 auf, welche Replika-Pseudozufallsrauschcodes RPRNC an einen Server zur Analyse von Satellitennavigationssignalen weiterleitet. Der Server S ist in diesem Ausführungsbeispiel dazu vorgesehen, gemäß einer Snapshot-PVT-Methode eine Orts- und Zeitbestimmung durchzuführen. Dazu benötigt er neben den auszuwertenden Satellitensignalausschnitten außerdem Replika-Pseudozufallsrauschcodes, welche mit Pseudozufallsrauschcodes korrespondieren, die die auszuwertenden Satellitensignalausschnitte schützen. Es handelt sich dabei um einen Schutz durch geheime PRN-Codes, d.h. die empfangbaren Signale sind dadurch geschützt, dass nur bei Kenntnis eines geheimen Pseudozufallsrauschcodes und dessen korrespondierenden, insbesondere identischen, Replika-Pseudozufallsrauschcodes eine Decodierung des Signalausschnitts möglich ist. Anhand des decodierten Signals ist dann die Ort- und Zeitbestimmung möglich.

Diese PVT-Bestimmung wird im beschriebenen Beispiel durch eine Auswerteeinheit A durchgeführt. Dieser wird neben den auszuwertenden Signalen (nicht dargestellt) der zugehörige Replika-Pseudozufallsrauschcode RPRNC` bereitgestellt. Beispielsweise fordert die Auswerteeinheit A einen spezifischen Replika-Pseudozufallsrauschcode RPRNC' aus dem Codearchiv 12 an. Der passende Replika-Pseudozufallsrauschcode RPRNC' wird anhand von Metadaten ermittelt, welche dem Satellitensignalausschnitt als Metadaten zugeordnet sind. Diese kennzeichnen beispielsweise das zugehörige Satellitensignal oder eine Verwendung sowie einen vermuteten oder behaupteten Zeitpunkt, zu welchem der Satellitensignalausschnitt aufgezeichnet wurde. Anhand dieser Informationen erfolgt ein Zugriff auf den passenden Replika-Pseudozufallsrauschcode RPRNC aus dem Codearchiv 12. Es werden dabei insbesondere mehrere Codefolgen der blockweise abgespeicherten Replika-Pseudozufallsrauschcodes angefragt, um einen Zeitraum rund um den behaupteten Zeitpunkt abzudecken und den Satellitensignalausschnitt mit den um diesen Zeitpunkt liegenden PRN-Codes zu korrelieren. Es werden mehrere Codefolgen auch deshalb angefragt, weil vorteilhafterweise mehrere Satellitensignale in einem aufgezeichneten Satellitensignalausschnitt enthalten sind und decodiert werden sollen. Zeichnet ein Empfänger eine Vielzahl oder alle ausgesandten Signale aus, werden durch die nachfolgende Korrelation mit den entsprechenden PRN-Codes die entsprechenden einzelnen Satellitensignale extrahiert.

Der Zugriff auf passende Replika-Pseudozufallsrauschcodes RPRNC` erfolgt insbesondere nach einer Prüfung einer Klassifizierung der Codes, durch welche ein entsprechender Zugriffsschutzmechanismus aktiviert oder gewählt wird. Beispielsweise kann so sichergestellt werden, dass eine Übertragung von Codes nicht in Richtung einer zu gering abgesicherten Zone erfolgt. Je nach Anwendung, für die beispielsweise eine PVT-Analyse durchgeführt werden soll oder je nach Benutzer liegen verschiedene Berechtigungen vor.

Die Serverumgebung S ist vorzugsweise durch bekannte Security-Schutzmaßnahmen vor einem unberechtigten Auslesen von Codes oder einem Abhören von Codes oder einer Manipulation der Auswertung zu schützen.

In einer Variante werden durch die Codeerzeugungseinheit 10 Replika-Pseudozufallsrauschcodes RPRNC laufend zu jedem Zeitpunkt oder kontinuierlich oder in einem definierten zeitlichen Abstand erzeugt, durch die Schnittstelle 11 jedoch in Varianten mit einer gewissen zeitlichen Verzögerung an das Codearchiv übermittelt, so dass im Codearchiv lediglich Replika-Pseudozufallsrauschcodes vergangener Zeitpunkte gespeichert sind.

Die Codeerzeugungseinheit 10 ist auf einem Empfänger 11 vorgesehen, welcher aus empfangenen Satellitennavigationssignalen eigenständig eine PVT-Analyse mit den selbst erzeugten Replika-Pseudozufallsrauschcodes durchführen kann und somit insbesondere eine gesicherte Systemzeit ermitteln kann.

Reguläre Satellitennavigationssignalempfänger für geschützte Signale können, wie in dem Ausführungsbeispiel aufgezeigt, ohne großen Aufwand modifiziert werden, so dass die Exportfunktionalität der erzeugten Codes realisiert werden kann. Auch der in einem regulären Empfänger realisierte Schutz von Geheimnissen, insbesondere der Systemparameter, kann vorteilhaft genutzt werden. Die ermittelten Replika-Pseudozufallsrauschcodes sind insbesondere bei der Übertragung von der Codeerzeugungseinheit 10 über die Schnittstelle 11 an das Codearchiv 12 vor unberechtigtem Auslesen zu schützen. Außerdem ist sicherzustellen, dass lediglich Codesequenzen für aktuelle oder vergangene Zeitpunkte generiert werden.

Das beschriebene Snapshot-PVT-System für geschützte Signale ist somit mit geringstmöglichen Sicherheitsanforderungen zu realisieren und kann insbesondere bestehende Sicherheitseinrichtungen vorteilhaft nutzen.

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren, aufweisend die folgenden Schritte:
- Erzeugen (1) von Replika-Pseudozufallsrauschcodes zugehörig zu einer Vielzahl von Empfangssignalausschnitten mit Hilfe von Systemparametern der Empfangssignalausschnitte, wobei die Vielzahl von Empfangssignalausschnitten verschiedene Zeitabschnitte betrifft, wobei die Systemparameter für einen betrachteten Zeitpunkt oder Zeitraum sowie einen bestimmten Sender gültig sind;
- Speichern (2) der erzeugten Replika-Pseudozufallsrauschcodes in einem Codearchiv, wobei mittels Pseudozufallsrauschcodes geschützte Empfangssignalausschnitte mit Hilfe der zugehörigen gespeicherten Replika-Pseudozufallsrauschcodes verarbeitbar sind; und
- Verwenden der in dem Codearchiv gespeicherten Replika-Pseudozufallsrauschcodes zur Decodierung eines Empfangssignalausschnittes der Vielzahl der Empfangssignalausschnitte, wobei die Replika-Pseudozufallsrauschcodes im Codearchiv blockweise gespeichert werden und für Auswertungen von zu vergangenen Zeitpunkten ausgestrahlten Nachrichtensignalen bereitgestellt werden.

2. Verfahren nach Anspruch 1, wobei die Replika-Pseudozufallsrauschcodes blockweise erzeugt und/ oder gespeichert werden.

3. Verfahren nach Anspruch 1 oder 2, wobei die Replika-Pseudozufallsrauschcodes gemeinsam mit den zugehörigen Empfangssignalausschnitt kennzeichnenden Daten gespeichert werden.

4. Verfahren nach einem der vorstehenden Ansprüche, wobei die Replika-Pseudozufallsrauschcodes nach Sender und/ oder Zeit sortiert gespeichert werden.

5. Verfahren nach einem der vorstehenden Ansprüche, wobei das Erzeugen (1) der Replika-Pseudozufallsrauschcodes oder ein Weiterleiten der erzeugten Replika-Pseudozufallsrauschcodes an das Codearchiv nur für Replika-Pseudozufallsrauschcodes erfolgt, die für zeitlich vor dem Erzeugungsdatum liegende Zeiträume gültig sind oder zum Zeitpunkt des Erzeugungsdatums gültig sind.

6. Verfahren nach Anspruch 5, wobei eine Systemzeit gesichert ermittelt wird, so dass zu zeitlich vor dem Erzeugungsdatum liegenden Zeiträumen zugehörige Replika-Pseudozufallsrauschcodes oder zu zum Zeitpunkt des Erzeugungsdatums zugehörige Replika-Pseudozufallsrauschcodes gesichert übermittelt werden.

7. Verfahren nach einem der vorstehenden Ansprüche, wobei eine Authentifizierung und insbesondere Autorisierung des Codearchivs durchgeführt wird und bei erfolgreicher Authentifizierung und insbesondere Autorisierung das Speichern (2) erfolgt.

8. Verfahren nach einem der vorstehenden Ansprüche, wobei die Replika-Pseudozufallsrauschcodes mit einer Kennzeichnung, welche insbesondere eine digitale Signatur aufweist, versehen werden, und eine Übertragung der erzeugten Replika-Pseudozufallsrauschcodes in eine Richtung ausgehend vom Codearchiv freigegeben wird in Abhängigkeit von der Kennzeichnung.

9. System aufweisend eine Codeerzeugungseinheit (10), ein Codearchiv (12) und eine Auswerteeinheit (A), wobei die Codeerzeugungseinheit (10) mit einer Schnittstelle (11) zu dem Codearchiv (12) ausgebildet ist,
- wobei die Codeerzeugungseinheit (10) ausgebildet ist zum Erzeugen von Replika-Pseudozufallsrauschcodes zugehörig zu einer Vielzahl von Empfangssignalausschnitten mit Hilfe von Systemparametern der Empfangssignalausschnitte, wobei die Vielzahl von Empfangssignalausschnitten verschiedene Zeitabschnitte betrifft, wobei die Systemparameter für einen betrachteten Zeitpunkt oder Zeitraum sowie einen bestimmten Sender gültig sind,
- wobei die Schnittstelle (11) ausgebildet ist zum Übertragen der erzeugten Replika-Pseudozufallsrauschcodes an das Codearchiv (12), wobei die übertragenen Replika-Pseudozufallsrauschcodes durch das Codearchiv (12) speicherbar sind, wobei mittels Pseudozufallsrauschcodes geschützte Empfangssignalausschnitte mit Hilfe der zugehörigen gespeicherten Replika-Pseudozufallsrauschcodes verarbeitbar sind;
- wobei das Codearchiv ausgebildet ist, die Replika-Pseudozufallsrauschcodes blockweise zu speichern und für Auswertungen von zu vergangenen Zeitpunkten ausgestrahlten Nachrichtensignalen bereitzustellen; und- wobei die Auswerteeinheit ausgebildet ist, auf die im Codearchiv gespeicherten Replika-Pseudozufallsrauschcodes zuzugreifen, um eine Decodierung eines Signalausschnittes vorzunehmen.

10. System nach Anspruch 9, wobei die Codeerzeugungseinheit (10) ausgebildet ist als Empfängereinheit (R) für Satellitennavigationssignale, wobei die Empfängereinheit (R) ausgebildet ist zum Erzeugen von Replika-Pseudozufallsrauschcodes zu Satellitensignalausschnitten empfangener Satellitennavigationssignale.

11. System nach Anspruch 10, wobei die Empfängereinheit (R) ausgebildet ist, eine Systemzeit gesichert zu ermitteln, so dass ein Übertragen erzeugter Replika-Pseudozufallsrauschcodes zugehörig zu zeitlich vor dem Erzeugungsdatum liegenden Zeiträumen oder zugehörig zum Zeitpunkt des Erzeugungsdatums gesichert erfolgt.

12. System nach einem der Ansprüche 9 bis 11, wobei die Codeerzeugungseinheit (10) ausgebil
det ist, die erzeugten Replika-Pseudozufallsrauschcodes gemeinsam mit den zugehörigen Empfangssignalausschnitt kennzeichnenden Daten über die Schnittstelle (11) an das Codearchiv (12) zu übertragen.

13. System nach einem der Ansprüche 9 bis 12, ferner aufweisend eine Authentifizierungskomponente zum Authentifizieren des Codearchivs.

14. System nach einem der Ansprüche 9 bis 13, wobei das Codearchiv (12) einen Zugriffsschutzmechanismus auf die gespeicherten Replika-Pseudozufallsrauschcodes aufweist.

15. System nach einem der Ansprüche 9 bis 14, ferner aufweisend mindestens eine weitere Codeerzeugungseinheit wie die Codeerzeugungseinheit des Systems nach einem der Ansprüche 9-13.

16. Computerprogrammprodukt mit einem Computerprogramm, das Mittel zur Durchführung des Verfahrens nach einem der Ansprüche 1 bis 8 aufweist, wenn das Computerprogramm auf einer programmgesteuerten Einrichtung mit Schnittstelle zu einem Codearchiv zur Ausführung gebracht wird.

## Claims

1. Method having the following steps of:
- generating (1) replica pseudorandom noise codes belonging to a multiplicity of reception signal sections with the aid of system parameters of the reception signal sections, wherein the multiplicity of reception signal sections relate to different time periods, wherein the system parameters are valid for a considered time or period and a particular transmitter;
- storing (2) the generated replica pseudorandom noise codes in a code archive, wherein reception signal sections protected by means of pseudorandom noise codes can be processed with the aid of the associated stored replica pseudorandom noise codes; and
- using the replica pseudorandom noise codes stored in the code archive to decode a reception signal section of the multiplicity of reception signal sections, wherein the replica pseudorandom noise codes are stored in the code archive in blocks and are made available for assessing message signals emitted at past times.

2. Method according to Claim 1, wherein the replica pseudorandom noise codes are generated and/or stored in blocks.

3. Method according to Claim 1 or 2, wherein the replica pseudorandom noise codes are stored together with data identifying the associated reception signal section.

4. Method according to one of the preceding claims, wherein the replica pseudorandom noise codes are stored in a manner sorted according to transmitter and/or time.

5. Method according to one of the preceding claims, wherein the generation (1) of the replica pseudorandom noise codes or forwarding of the generated replica pseudorandom noise codes to the code archive is carried out only for replica pseudorandom noise codes which are valid for periods before the generation date in terms of time or at the time of the generation date.

6. Method according to Claim 5, wherein a system time is determined securely, such that replica pseudorandom noise codes associated with periods before the generation date in terms of time or replica pseudorandom noise codes associated with the time of the generation date are transmitted securely.

7. Method according to one of the preceding claims, wherein the code archive is authenticated and, in particular, authorized and the storing (2) is carried out in the event of successful authentication and, in particular, authorization.

8. Method according to one of the preceding claims, wherein the replica pseudorandom noise codes are provided with an identification which has a digital signature, in particular, and transmission of the generated replica pseudorandom noise codes in a direction starting from the code archive is enabled on the basis of the identification.

9. System having a code generation unit (10), a code archive (12) and an evaluation unit (A), wherein the code generation unit (10) is designed with an interface (11) to the code archive (12),
- wherein the code generation unit (10) is designed to generate replica pseudorandom noise codes belonging to a multiplicity of reception signal sections with the aid of system parameters of the reception signal sections, wherein the multiplicity of reception signal sections relate to different time periods, wherein the system parameters are valid for a considered time or period and a particular transmitter,
- wherein the interface (11) is designed to transmit the generated replica pseudorandom noise codes to the code archive (12), wherein the transmitted replica pseudorandom noise codes can be stored by the code archive (12), wherein reception signal sections protected by means of pseudorandom noise codes can be processed with the aid of the associated stored replica pseudorandom noise codes;
- wherein the code archive is designed to store the replica pseudorandom noise codes in blocks and to make them available for evaluating message signals emitted at past times; and
- wherein the evaluation unit is designed to access the replica pseudorandom noise codes stored in the code archive in order to decode a signal section.

10. System according to Claim 9, wherein the code generation unit (10) is designed as a receiver unit (R) for satellite navigation signals, wherein the receiver unit (R) is designed to generate replica pseudorandom noise codes for satellite signal sections of received satellite navigation signals.

11. System according to Claim 10, wherein the receiver unit (R) is designed to securely determine a system time, such that generated replica pseudorandom noise codes belonging to periods before the generation date in terms of time or belonging to the time of the generation date are transmitted securely.

12. System according to one of Claims 9 to 11, wherein the code generation unit (10) is designed to transmit the generated replica pseudorandom noise codes, together with data identifying the associated reception signal section, to the code archive (12) via the interface (11).

13. System according to one of Claims 9 to 12, also having an authentication component for authenticating the code archive.

14. System according to one of Claims 9 to 13, wherein the code archive (12) has an access protection mechanism for the stored replica pseudorandom noise codes.

15. System according to one of Claims 9 to 14, also having at least one further code generation unit like the code generation unit of the system according to one of Claims 9-13.

16. Computer program product having a computer program which has means for carrying out the method according to one of Claims 1 to 8 when the computer program is executed on a program-controlled device with an interface to a code archive.

## Revendications

1. Procédé comprenant les étapes suivantes :
- génération (1) des codes de bruit pseudo-aléatoire de réplique associés à une pluralité d'extraits de signaux reçus à l'aide de paramètres de système des extraits de signaux reçus, la pluralité d'extraits de signaux reçus concernant différentes périodes de temps, les paramètres de système étant valables pour un moment ou une période observée ainsi que pour un émetteur particulier ;
- stockage (2) des codes de bruit pseudo-aléatoires générés dans une archive de codes, des extraits de signaux de réception protégés au moyen de codes de bruit pseudo-aléatoires pouvant être traités à l'aide des codes de bruit pseudo-aléatoires stockés leur appartenant; et
- utilisation des codes de bruit pseudo-aléatoire de réplique stockés dans l'archive de codes pour décoder un extrait de signal de réception de la pluralité d'extraits de signaux de réception, les codes de bruit pseudo-aléatoire de réplique étant stockés par blocs dans l'archive de codes et étant mis à disposition pour des évaluations de signaux de messages émis à des moments préalables.

2. Procédé selon la revendication 1, dans lequel les codes de bruit pseudo-aléatoire de réplique sont générés et/ou stockés par blocs.

3. Procédé selon la revendication 1 ou 2, dans lequel les codes de bruit pseudo-aléatoire de réplique sont stockés en même temps que les données caractérisant la section de signal de réception correspondante.

4. Procédé selon l'une quelconque des revendications précédentes, dans lequel les codes de bruit pseudo-aléatoire de réplique sont stockés en étant triés en fonction de l'émetteur et/ou en fonction du temps.

5. Procédé selon l'une des revendications précédentes, dans lequel la génération (1) des codes de bruit pseudo-aléatoire de réplique ou une transmission des codes de bruit pseudo-aléatoire de réplique générés à l'archive de codes ne s'effectue que pour des codes de bruit pseudo-aléatoire de réplique qui sont temporellement valables pour des moments antérieurs à la date de génération ou qui sont valables au moment de la date de génération.

6. Procédé selon la revendication 5, dans lequel une heure système est déterminée de manière sécurisée, de sorte que des codes de bruit pseudo-aléatoire de réplique appartenant temporellement à des moments antérieurs au moment de la date de génération ou à des codes de bruit pseudo-aléatoire de réplique appartenant au moment de la date de génération sont transmis de manière sécurisée.

7. Procédé selon l'une des revendications précédentes, dans lequel une authentification et en particulier une autorisation de l'archive de codes est effectuée et, si l'authentification et en particulier l'autorisation sont réussies, le stockage (2) est effectué.

8. Procédé selon l'une des revendications précédentes, dans lequel les codes de bruit pseudo-aléatoire de réplique sont munis d'une identification, qui comporte notamment une signature numérique, et une transmission des codes de bruit pseudo-aléatoire de réplique générés est autorisée dans un sens à partir de l'archive de codes en fonction de l'identification.

9. Système présentant une unité de génération de code (10), une archive de code (12) et une unité d'évaluation (A), l'unité de génération de code (10) étant réalisée avec une interface (11) vers l'archive de code (12),
- l'unité de génération de code (10) étant conçue pour générer des codes de bruit pseudo-aléatoire de réplique appartenant à une pluralité d'extraits de signal de réception à l'aide de paramètres de système des extraits de signal de réception, la pluralité d'extraits de signal de réception concernant différentes périodes de temps, les paramètres de système étant valables pour un moment ou une période observée ainsi que pour un émetteur particulier,
- l'interface (11) étant conçue pour transmettre les codes de bruit pseudo-aléatoire de réplique générés à l'archive de codes (12), les codes de bruit pseudo-aléatoire de réplique transmis pouvant être stockés par l'archive de codes (12), des extraits de signaux de réception protégés au moyen de codes de bruit pseudo-aléatoire pouvant être traités à l'aide des codes de bruit pseudo-aléatoire de réplique stockés leur appartenant ;
- l'archive de codes étant conçue pour stocker par blocs les codes de bruit pseudo-aléatoire de réplique et les mettre à disposition pour des évaluations de signaux de messages émis à des moments antérieurs ; et l'unité d'évaluation étant conçue pour accéder aux codes de bruit pseudo-aléatoire de réplique stockés dans l'archive de codes afin de procéder à un décodage d'un extrait de signal.

10. Système selon la revendication 9, dans lequel l'unité de génération de code (10) est conçue comme une unité de réception (R) de signaux de navigation par satellite, l'unité de réception (R) étant conçue pour générer des codes de bruit pseudo-aléatoire de réplique pour des extraits de signaux de satellite de signaux de navigation par satellite reçus.

11. Système selon la revendication 10, dans lequel l'unité de réception (R) est conçue pour déterminer de manière sécurisée une heure système, de sorte qu'une transmission de codes de bruit pseudo-aléatoire générés s'effectue de manière sécurisée appartenant à des périodes de temps temporellement situées à un moment antérieur à la date de génération ou appartenant au moment de la date de génération.

12. Système selon l'une des revendications 9 à 11, dans lequel l'unité de génération de code (10) est conçue pour transmettre les codes de bruit pseudo-aléatoires générés, conjointement aux données caractérisant l'extrait de signal de réception associé, à l'archive de codes (12) via l'interface (11).

13. Système selon l'une quelconque des revendications 9 à 12, comprenant en outre un composant d'authentification pour authentifier l'archive de codes.

14. Système selon l'une quelconque des revendications 9 à 13, dans lequel l'archive de codes (12) comprend un mécanisme de protection d'accès aux codes de bruit pseudo-aléatoires stockés.

15. Système selon l'une quelconque des revendications 9 à 14, comprenant en outre au moins une autre unité de génération de code telle que l'unité de génération de code du système selon l'une quelconque des revendications 9 à 13.

16. Progiciel informatique comprenant un programme informatique qui comporte des moyens de mise en œuvre du procédé selon l'une quelconque des revendications 1 à 8, lorsque le programme d'ordinateur est exécuté sur un dispositif commandé par un programme disposant d'une interface ayant une archive de codes.
